# EUROPÄISCHE PATENTANMELDUNG

(11) **EP 1 034 843 A1**
(43) Veröffentlichungstag der Anmeldung: **13.09.2000**
(21) Anmeldenummer: 00810119.8
(22) Anmeldetag: 11.02.2000
(51) Int. Cl.: B01J 37/34, B01J 37/02, B01J 35/04, C23C 4/12

(54) **Verfahren zur Herstellung einer beschichteten Struktur, die sich zum Durchführen von heterogenen Katalysen eignet**

(30) Priorität: 10.03.1999 EP 99810209
(71) Anmelder: Sulzer Metco AG, 5610 Wohlen (CH); Sulzer Chemtech AG, CH-8404 Winterthur (CH)
(72) Erfinder: Loch, Michael Paul Willy, Dr., 79664 Wehr (DE); Barbezat, Gérard Aurèle, 8152 Opfikon (CH); Levering, Willem Wiekert, 8405 Winterthur (CH)
(74) Vertreter: Sulzer Management AG

(57) **Zusammenfassung**

Das Verfahren betrifft die Herstellung einer beschichteten Struktur (1), die sich zum Durchführen von heterogenen Katalysen eignet. Diese Struktur ist ein Katalysatorkörper, der aufeinander angeordnete Lagen (2,3) von folienartigen Blechen (10) sowie in oder zwischen den Lagen integrierte Strömungskanäle umfasst. Ein Teil der Bleche oder alle können umgeformt sein, so dass aufgrund einer Formgebung der Bleche sich die Strömungskanäle ergeben. In einem Behälter (101) werden auf die einzelnen Bleche (10) - vorzugsweise vor einer Umformung - mit einem Plasmaspritzverfahren, nämlich einem LPPS-Verfahren (Low Pressure Plasma Spraying), unter Nutzung einer Plasmaflamme (212), die auf einen injizierten Pulverstrahl defokussierend wirkt, Beschichtungen (11) aufgebracht. Diese Beschichtungen enthalten katalytisch wirksame Stoffe; sie sind porös oder weisen eine hohe Rauhigkeit auf. Für den Druck im Behälter wird ein Wert zwischen rund 15 und 1500Pa, vorzugsweise zwischen 100 und 500Pa eingestellt. Nach dem Beschichten und gegebenenfalls einem Umformen werden die Bleche zu einem Stapel oder einem Wickelkörper zusammengefügt. Anstelle von Blechen sind auch andere flächenartige Gebilde verwendbar.

## Beschreibung

Die Erfindung betrifft ein Verfahren gemäss Oberbegriff von Anspruch 1, nämlich ein Verfahren zur Herstellung einer beschichteten Struktur, die sich zum Durchführen von heterogenen Katalysen eignet. Sie bezieht sich auch auf entsprechende Katalysatorkörper.

Aus der EP-A 0 433 223 (= P.6318) ist ein Katalysatorkörper mit einer Kreuzkanalstruktur bekannt, dessen Oberflächen, die mit Fluiden in Kontakt gebracht werden können, beschichtet sind. Die Kreuzkanalstruktur hat einen Aufbau, der aus aneinander grenzenden Lagen gebildet ist. An Grenzflächen zwischen benachbarten Lagen erstrecken sich für die Fluide vorgesehene Strömungskanäle, die gegeneinander offen sind und die sich kreuzen. Die Beschichtung des Katalysatorkörpers besteht aus einem Washcoat, der dank einer hohen Porösität eine grosse spezifische Oberfläche aufweist. Der Washcoat dient als Träger für katalytisch aktive Stoffe. Ausser dem genannten Katalysatorkörper mit Kreuzkanalstruktur sind auch anders aufgebaute Katalysatorkörper mit beschichteten Oberflächen bekannt.

Aufgabe der Erfindung ist es, ein weiteres Verfahren zur Herstellung von beschichteten Strukturen zu schaffen, die sich als Katalysatorkörper eignen und deren Beschichtungen mit Vorteil grosse spezifische Oberflächen aufweisen. Diese Aufgabe wird durch das im Anspruch 1 definierte Verfahren gelöst.

Das Verfahren betrifft die Herstellung einer beschichteten Struktur, die sich zum Durchführen von heterogenen Katalysen eignet. Diese Struktur ist ein Katalysatorkörper, der aufeinander angeordnete Lagen von folienartigen Blechen sowie in oder zwischen den Lagen intergrierte Strömungskanäle umfasst. Ein Teil der Bleche oder alle können umgeformt sein, so dass aufgrund einer Formgebung der Bleche sich die Strömungskanäle ergeben. In einem Behälter werden auf die einzelnen Bleche - vorzugsweise vor einer Umformung - mit einem Plasmaspritzverfahren, nämlich einem LPPS-Verfahren, unter Nutzung einer Plasmaflamme, die auf einen injizierten Pulverstrahl defokussierend wirkt, Beschichtungen aufgebracht. Diese Beschichtungen enthalten katalytisch wirksame Stoffe; sie sind porös oder weisen eine hohe Rauhigkeit auf. Für den Druck im Behälter wird ein Wert zwischen rund 15 und 1500 Pa, vorzugsweise zwischen 100 und 500 Pa eingestellt. Nach dem Beschichten und gegebenenfalls einem Umformen werden die Bleche zu einem Stapel oder einem Wickelkörper zusammengefügt.

Anstelle von Blechen sind in vielen Fällen auch Gewebe oder andere flächenartige Gebilde wie beispielsweise Gewirke, Vliesse oder Streckgitter verwendbar. Wenn nachfolgend bei der Beschreibung der Erfindung lediglich Bleche genannt werden, so ist dies jeweils so zu verstehen, dass die Bleche als Gesamtheit oder auch selektiv sich in der Regel durch andere flächenartige Gebilde substituieren lassen. Ausserdem können beispielsweise Gewebe auch zu Taschen geformt sein, in welchen weiteres Katalysatormaterial in Form von Festbetten enthalten ist. Katalysatorkörper mit einem derartigen Aufbau sind aus der EP-A 0 396 650 (= P.6216/47) bekannt. Als Materialien für die flächenartigen Gebilde sind auch Nichtmetalle wie z. B. Kunststoffe, Glas und/oder Kohlenstoff in Form von Fasern möglich, wobei verschiedene Materialien kombiniert sein können.

Das erfindungsgemässe Verfahren geht von einem neueren LPPS-Verfahren aus (LPPS = Low Pressure Plasma Spraying), das aus der US-A 5 853 815 (E. Muehlberger) bekannt ist. Bei diesem Verfahren wird eine Plasmaflamme bei einem besonders niedrigen Druck erzeugt. Im Vergleich zu älteren LPPS-Verfahren entsteht eine Plasmaflamme, die transversal beträchtlich aufgeweitete ist und die auf einen Pulverstrahl, der mit einem Fördergas in das Plasma injiziert wird, defokussierend wirkt. Innerhalb einer Dauer, die für thermische Beschichtungsverfahren kurz ist, lässt sich eine grosse Fläche mit der das Beschichtungsmaterial dispers führenden Plasmaflamme überstreichen. Es entstehen mit einem solchen LPPS-Verfahren, bei dem mit Plasmaflammen beispielsweise bis zu 2,5 m Länge gearbeitet wird, gleichmässige und sehr dünne Schichten. Für die Ausbildung einer Beschichtung mit hoher spezifischer Oberfläche muss die Beschichtung mit einer Vielzahl von Einzelaufträgen aufgebaut werden. Geeignetes Beschichtungsmaterial besteht aus Gemengen von Pulverpartikeln, für die der mittlere Partikeldurchmesser vorzugsweise kleiner als rund 5 10³ nm ist. Jedes Partikel, dessen Durchmesser nicht wesentlich kleiner als der mittlere Durchmesser ist, wird in der Plasmaflamme nicht oder nur teilweise aufgeschmolzen, so dass sich eine poröse Schicht ausbildet, die weitgehend die mikroskopische Struktur einer Pulverschüttung hat.

Die abhängigen Ansprüche 2 bis 6 beziehen sich auf vorteilhafte Ausführungsformen des erfindungsgemässen Verfahrens. Gegenstand der Ansprüche 7 bis 10 ist ein Katalysatorkörper mit Beschichtungen, die gemäss dem im Anspruch 1 angegebenen LPPS-Verfahren hergestellt sind.

Nachfolgend wird die Erfindung anhand der Zeichnungen erläutert. Es zeigen:
- Fig. 1: eine Anlage zur Herstellung von LPPS-Schichten auf Blechen,
- Fig. 2: eine Zeichnung nach einem elektronenmikroskopischen Bild, das einen Querschnitt durch eine LPPS-Schicht darstellt,
- Fig. 3: eine schematische Darstellung zu einer Beschichtung, die einzelne grosse Partikel enthält,
- Fig. 4: einen Ausschnitt eines Katalysatorkörpers,
- Fig. 5: ausschnittweise zwei Lagen einer Kreuzkanalstruktur und
- Fig. 6: ein Streckgitter.

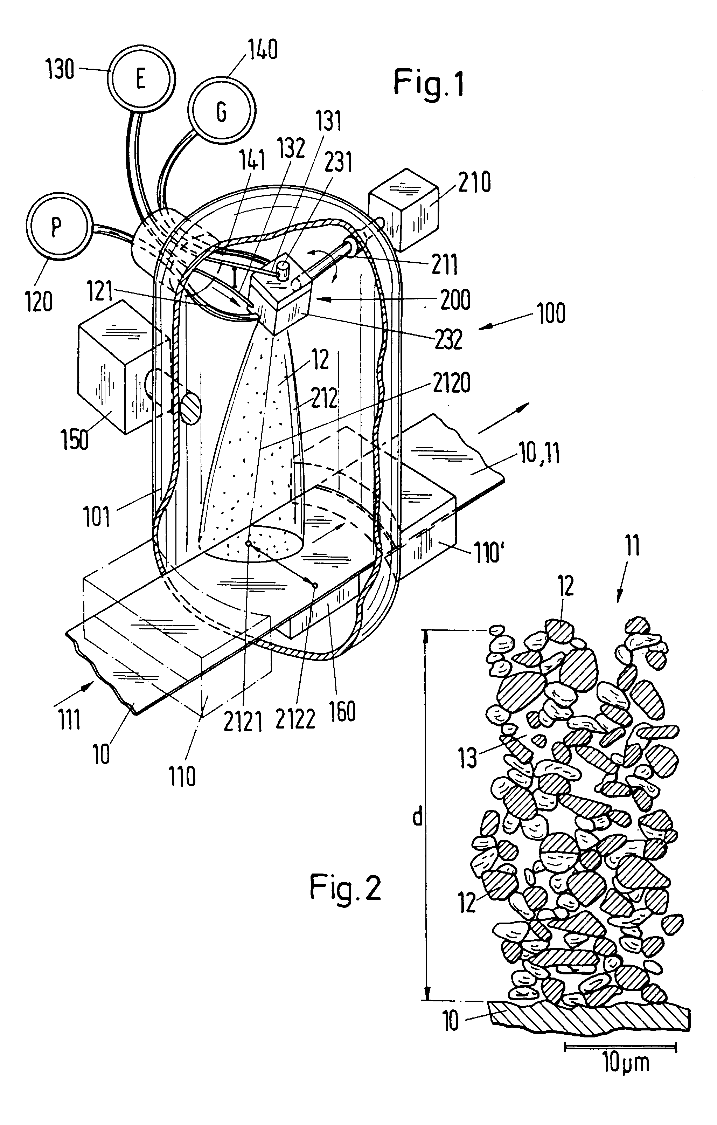

Eine Anlage 100, die als Beispiel in Fig. 1 sehr vereinfacht dargestellt ist, ermöglicht eine kontinuierliche Herstellung von LPPS-Beschichtungen 11 auf einem bandförmigen Blech 10, das zwischen einer Eingangsschleuse 110 (strichpunktiert angedeutet) und einer Ausgangsschleuse 110' durch einen evakuierbaren Behälter 101 in einer horizontalen Richtung (Pfeil 111) transportiert werden kann. Mit einer Spritzpistole 200 (engl. gun) und mittels einer aufgeweiteten Plasmaflamme 212 wird ein Beschichtungsmaterial, das in Form von Partikeln 12 eines Pulvers P vorliegt, auf das Blech 10 aufgetragen, wobei die Flamme 212 durch Verschwenken der Pistole 200 quer zur Transportrichtung 111 des Blechs hin- und herbewegt wird. Eine zentrale Achse 2120 der Flamme 212 macht dabei mit ihrem Fusspunkt auf der Oberfläche des Blechbands 10 eine Pendelbewegung zwischen Umkehrpunkten 2121 und 2122. Falls eine möglichst gleichmässige Beschichtung 11 erwünscht ist, müssen die Umkehrpunkte 2121 und 2122-anders als in Fig. 1 dargestellt - ausserhalb des Bands 10 liegen.

Die mit einem Antrieb 210 und über eine Welle 211 verschwenkbare Pistole 200 umfasst eine Kathode 231 und eine Anode 232 mit elektrischen Anschlussleitungen 131 bzw. 132. Die Elektroden 231 und 232 bilden einen Hohlraum, in dem ein Plasma erzeugt wird, sowie eine Düse (nicht sichtbar), über welche die Plasmaflamme 212 und die in ihr mitgeführten Partikel 12 austreten.

Eine Anlagenkomponente 120 enthält Pulvervorräte und Förder- sowie Dosiereinrichtungen für ein Pulver P, das als Beschichtungsmaterial verwendet wird und das über eine flexible Leitung 121 in die Pistole 200 einspeisbar ist. Elektrische Energie E für die Erzeugung der Plasmaflamme 212 wird über eine Stromquelle 130 (Stromstärke l) und die Anschlussleitungen 131, 132 der Pistole 200 zugeführt. Eine Anlagenkomponente 140 enthält Gasvorräte und eine Dosier- und Mischeinrichtung für ein Arbeitsgas G (Gemisch von Argon, Wasserstoff, Helium und/oder Stickstoff), das über eine Leitung 141 in die Pistole 200 eingespeist wird. Mit einer weiteren Anlagenkomponente 150, die eine Vakuumpumpe und Filter umfasst, wird der für das besondere LPPS-Verfahren benötigte Niederdruck erzeugt. Das Blech 10 wird über einen Tisch 160 gezogen, der als Kühlkörper (mit entsprechenden, nicht dargestellten Anschlüssen für ein Kühlmittel) ausgebildet sein kann.

Die Beschichtung 11, die mit Vorteil eine poröse Struktur aufweist, wird aus dem pulverförmigem Beschichtungsmaterial durch Auftrag einer Vielzahl von Einzelaufträgen aufgebaut. Es ist eine Beschichtungensdicke in der Grössenordnung von 0.01 mm (= 10⁴ nm) vorgesehen. Die Pulverpartikel 12 des Beschichtungsmaterials weisen einen mittleren Durchmesser auf, der so gross ist, dass jedes Partikel, dessen Durchmesser nicht wesentlich kleiner als der mittlere Durchmesser ist, in der Plasmaflamme nur teilweise aufgeschmolzen wird; sehr grosse Partikel werden je nach Temperatur der Plasmaflamme überhaupt nicht aufgeschmolzen. Pro Einzelauftrag wird ein Auftrag von dispers verteilten Partikeln aufgebracht. Die mittlere Dicke des Einzelauftrags beträgt rund 100 bis 500 nm.

Das Blech 10 wird vor dem Beschichten beispielsweise sandgestrahlt, so dass sich eine Oberfläche ergibt, die zu einer guten Haftung der Beschichtung 11 führt. Mittels einer durch das Sandstrahlen erzeugten Rauhigkeit lässt sich - in Bezug auf die katalytisch aktiven Oberflächen der Beschichtung 11 - die spezifische Oberfläche, die gross sein soll, günstig beeinflussen.

Für die Beschichtung 11 kann ein keramisches Material, beispielsweise Al₂O₃, verwendet werden, um einen Träger für ein katalytisch aktives Material, wie beispielsweise Platin, Paladium oder andere Metalle zu erzeugen. Beim Beschichten werden ein Einzelauftrag oder mehrere Einzelaufträge mit dem Trägermaterial alternierend mit einem Einzelauftrag des katalytisch aktiven Materials aufgebracht. Es ist auch ein simultaner Auftrag von Trägermaterial und katalytisch aktivem Material möglich. Als Beschichtungsmaterial kann auch ein katalytisch aktives Material, beispielsweise Cu, verwendet werden.

Ein Resultat des LPPS-Verfahrens ist in Fig. 2 anhand einer Zeichnung darstellt, die nach einem elektronenmikroskopischen Präparat (Dünnschliff, Schichtdicke rund 30 µm) gezeichnet ist. Die Pulverpartikel 12, mit denen auf dem Substrat, nämlich dem Blech 10, die Beschichtung 11 mit einer Dicke d aufgebaut wird, haften dank eines teilweisen Aufschmelzens aneinander, erzeugen aber einen Aufbau, der weitgehend die Struktur einer Pulverschüttung hat. Ein kommunizierender Innenraum aus Poren 13 ermöglicht eine Diffusion der Reaktanden zwischen der äusseren Grenze der Beschichtung 11 und den in ihr enthaltenen Partikeloberflächen 12.

Zur Erzeugung der in Fig. 2 dargestellten Beschichtung wurde ein Al₂O₃-Pulver verwendet, dessen Partikel eine Grössenverteilung aufweisen, die durch folgende Siebanalyse charakterisierbar ist: -13 +2,0 µm (d. h. 5% der Partikel sind gröber als 13 µm und 2% feiner als 2 µm). Das Substrat war wassergekühlt. Die Prozessparameter wurden wie folgt eingestellt: Pulvereinspeisung in die Plasmaflamme 212 mit 160 g/min und 48 SLPM (Liter pro Minute, Gas bei Normalbedingungen) Fördergas; Druck im Behälter 101: 1100 Pa; Argonzufuhr: 130 SLPM; Abstand zwischen Pistolendüse und Substrat: 1.3 m; Stromstärke l: 1000 A; Anzahl Einzelaufträge: 300; Relativgeschwindigkeit zwischen Substrat 10 und Plasmaflamme 212: 138 m/min. Der Durchmesser der Plasmaflamme auf dem Substrat beträgt rund 0,4 m.

Durch Variieren der Prozessparameter während des Beschichtens können Gradienten in der Beschichtung 11 erzeugt werden: eine variable Porosität (mit Porositäten von praktisch 0% bis grösser als 10%) oder eine sich ändernde Konzentration des katalytisch aktiven Stoffes.

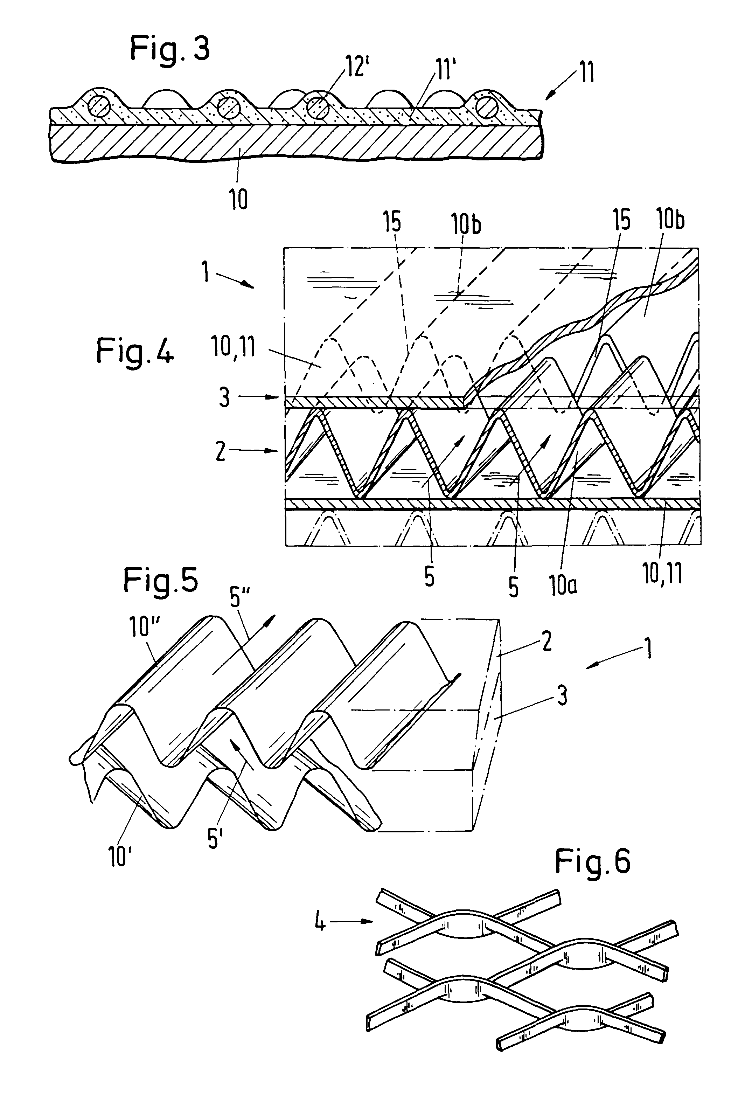

Für die Beschichtung 11 können Materialien verwendet werden, für die sich eine heterogene Schicht ergibt, nämlich derart - siehe Fig. 3 -, dass die Beschichtung 11 aus einer relativ kleinen Anzahl von grossen, in einer homogenen Schicht 11' gleichmässig verteilten Partikeln 12' aufgebaut ist. Die homogene Schicht 11' ist porös und setzt sich aus einer relativ grossen Anzahl von kleinen Partikeln zusammen. Die grossen Partikel 12' weisen vorzugsweise eine poröse Feinstruktur auf. Die Partikel 12' erzeugen eine hohe Rauhigkeit der Beschichtung 11, was beim Einsatz der solcherart beschichteten Bleche 11 in Katalysatorkörpern zu Mikrowirbeln in einer Strömung des zu behandelnden Fluids führen kann. Solche Mikrowirbel sind vorteilhaft, da sie einen Stofftransport durch Grenzschichten der Fuidströmung fördern.

Nach dem Beschichten werden die Bleche 11 in eine geeignete Form gebracht, in der sie zu einem Katalysatorkörper 1 zusammengefügt werden können. Die beschichteten Bleche 11 können - eben oder nach einer Umformung - zu einem zylindrischen Körper gewickelt werden. Um in einem solchen Wickelkörper Strömungskanäle für ein zu behandelndes Fluid zu erhalten, müssen gegebenenfalls Abstandhalter zwischen die beschichteten Bleche 11 eingelegt werden. Der Katalysatorkörper 1 kann auch als Stapel von planen Lagen aus Blechen 11 gebildet werden, die eben und glatt sind oder die zur Erzeugung von Strömungskanälen umgeformt sind. Ebene Bleche 11 werden in Abständen angeordnet, so dass zwischen ihnen Strömungskanäle frei bleiben. Es kann beispielsweise auch jede zweite der aufeinander angeordneten Lagen aus einem umgeformten, Strömungskanäle bildenden Blech 11 bestehen.

Die umgeformten Bleche können gewellt sein oder einen zickzackförmigen Querschnitt aufweisen. Fig. 4 zeigt ausschnittsweise ein erstes Beispiel eines erfindungsgemässen Katalysatorkörpers 1. Dieser ist alternierend aus Lagen 2 mit gewellten Blechen 10a, 10b und Lagen 3 mit ebenen Blechen 10 zusammengefügt. Die wellenförmigen Bleche 10a sind Streifen, die sich quer zu der Richtung eines Fluidstroms 5, dem Strom des zu behandelnden Fluids, erstrecken. Benachbarte Streifen 10a und 10b der Lage 2 sind zueinander versetzt angeordnet, so dass jeweils neue Anströmkanten 15 den Fluidstrom 5 in Teilströme trennen. Solche Anströmkanten 15 bewirken durch die Beeinflussung der Fluidströmung einen verbesserten Stofftransport an den Oberflächen der Bleche 10b. In der Regel sind alle Bleche 10, 10a und 10b Träger von katalytischen LPPS-Beschichtungen.

Die Bleche können eine zusätzliche Feinstrukturierung, beispielsweise eine Rillierung, aufweisen (nicht dargestellt). Sie können auch Durchbrüche, beispielsweise in Form von kreisförmigen Löchern, enthalten, die durch Entfernen von Material - beispielsweise Ausstanzen - gebildet sind.

Fig. 5 zeigt ausschnittsweise zwei benachbarte Lagen 2 und 3 einer Kreuzkanalstruktur. In einem Katalysatorkörper 1 mit Kreuzkanalstruktur sind alle Bleche umgeformt. Die Strömungskanäle mit Fluidstömen 5', 5" benachbarter Lagen 2, 3 sind gegeneinander offen und kreuzen sich.

Alle oder einzelne Bleche 10 können Durchbrüche aufweisen, die mittels regelmässig angeordneter Schlitze und einer Umformung gebildet sind. Solche Bleche 10 sind beispielsweise Streckgitter 4, siehe Fig. 6. Diese können auch als beschichtete oder unbeschichtete Abstandstandhalter zwischen ebenen Blechen 10 verwendet werden. Oder solche Streckgitter 4, die beschichtet sind, können zu gewellten Lagen für einen Katalysatorkörper 1 mit Kreuzkanalstruktur umgeformt werden.

Der erfindungsgemässe Katalysatorkörper kann beispielsweise in Abgaskatalysatoren verwendet werden. Eine weitere Verwendungmöglichkeit ist eine Reaktivdestillation in einer Kolonne, die eine Packung in Form des erfindungsgemässen Katalysatorkörpers enthält. In einer solchen Kolonne finden simultan a) ein Stoffaustausch zwischen einem Rieselfilm auf der Packungsoberfläche und einem Gas, das durch die Kanäle der Packung strömt, und b) katalytischen Prozessen an den beschichteten Packungsoberflächen statt.

## Patentansprüche

1. Verfahren zur Herstellung einer beschichteten Struktur (1), die sich zum Durchführen von heterogenen Katalysen eignet, welche Struktur aufeinander angeordnete Lagen (2, 3) von folienartigen Blechen (10) sowie in oder zwischen den Lagen integrierte Strömungskanäle umfasst, wobei ein Teil der Bleche oder alle umgeformt sein können, so dass aufgrund einer Formgebung der Bleche die Strömungskanäle gebildet sind,
dadurch gekennzeichnet, dass in einem Behälter (101) auf die einzelnen Bleche (10) - vorzugsweise vor einer Umformung - mit einem Plasmaspritzverfahren, nämlich einem LPPS-Verfahren, unter Nutzung einer Plasmaflamme (212), die auf einen injizierten Pulverstrahl defokussierend wirkt, katalytisch wirksame Beschichtungen (11) aufgebracht werden, die porös sind oder eine hohe Rauhigkeit aufweisen, wobei für den Druck im Behälter ein Wert zwischen rund 15 und 1500 Pa, vorzugsweise zwischen 100 und 500 Pa eingestellt wird, dass nach dem Beschichten und gegebenenfalls einem Umformen die Bleche zu einem Stapel oder einem Wickelkörper zusammengefügt werden, und dass ferner anstelle von Blechen auch entsprechend zu beschichtende Gewebe oder andere flächenartige Gebilde verwendbar sind.

2. Verfahren nach Anspruch 1, dadurch gekennzeichnet, dass die Beschichtung (11) aus pulverförmigem Beschichtungsmaterial (P) durch Auftrag einer Vielzahl von Einzelaufträgen aufgebaut wird, wobei Pulverpartikel (12) des Beschichtungsmaterials einen mittleren Durchmesser aufweisen, der vorzugsweise kleiner als rund 5 10³ nm ist, jedes Partikel, dessen Durchmesser nicht wesentlich kleiner als der mittlere Durchmesser ist, in der Plasmaflamme nicht oder nur teilweise aufgeschmolzen wird, pro Einzelauftrag ein Auftrag von dispers verteilten Partikeln aufgebracht wird und die mittlere Dicke des Einzelauftrags rund 100 bis 500 nm beträgt.

3. Verfahren nach Anspruch 1 oder 2, dadurch gekennzeichnet, dass die Bleche (10) vor dem Beschichten beispielsweise mittels Sandstrahlens behandelt werden, so dass sich eine Oberfläche ergibt, die eine gute Haftung der Beschichtung (11) entstehen lässt und - in Bezug auf die katalytisch aktiven Oberflächen der Beschichtung - sich eine hohe spezifische Oberfläche ergibt.

4. Verfahren nach einem der Ansprüche 1 bis 3, dadurch gekennzeichnet, dass für die Beschichtung (11) ein keramisches Material, beispielsweise Al₂O₃, oder ein anderer Stoff oder Stoffgemisch verwendet wird, um einen Träger für ein katalytisch aktives Material, wie beispielsweise Platin, Paladium oder andere Metalle zu erzeugen, wobei beim Beschichten ein Einzelauftrag oder mehrere Einzelaufträge aus dem Trägermaterial alternierend mit einem Einzelauftrag des katalytisch aktiven Materials aufgebracht werden oder ein simultaner Auftrag von Trägermaterial und katalytisch aktivem Material durchgeführt wird.

5. Verfahren nach einem der Ansprüche 1 bis 4, dadurch gekennzeichnet, dass für die Beschichtung (11) Materialien verwendet werden, für die sich eine heterogene Schicht ergibt, derart, dass die Beschichtung aus einer relativ kleinen Anzahl von grossen, gleichmässig verteilten Partikeln (12') und einer relativ grossen Anzahl von kleinen Partikeln aufgebaut ist, wobei die grossen, eine hohe Rauhigkeit erzeugenden Partikel vorzugsweise eine poröse Feinstruktur aufweisen.

6. Verfahren nach einem der Ansprüche 1 bis 4, dadurch gekennzeichnet, dass für das Beschichtungsmaterial ein katalytisch aktives Material, beispielsweise Cu, verwendet wird.

7. Katalysatorkörper in Form einer Bleche oder andere flächenartige Gebilde umfassenden Struktur, wobei die flächenartigen Gebilde eine Beschichtung aufweisen, die gemäss einem der Ansprüche 1 bis 6 hergestellt ist.

8. Katalysatorkörper nach Anspruch 7, dadurch gekennzeichnet, dass ebene Bleche (10) in Strömungskanäle bildenden Abständen angeordnet sind und/oder mindestens jede zweite der aufeinander angeordneten Lagen aus einem umgeformten, Strömungskanäle bildenden Blech besteht.

9. Katalysatorkörper nach Anspruch 8, dadurch gekennzeichnet, dass die geformten Bleche (10) gewellt sind oder einen zickzackförmigen Querschnitt aufweisen und dass die Bleche ferner eine Feinstrukturierung, beispielsweise eine Rillierung, oder durch Entfernen von Material gebildete Durchbrüche, beispielsweise kreisförmige Löcher, aufweisen können, oder dass alle oder einzelne Bleche (10, 4) aufgrund von regelmässig angeordneten Schlitzen und einer Umformung Durchbrüche aufweisen, so dass diese Bleche beispielsweise streckgitterartig ausgebildet sind.

10. Katalysatorkörper nach Anspruch 9, dadurch gekennzeichnet, dass alle Bleche (10) geformt sind und die Strömungskanäle benachbarter Lagen gegeneinander offen sind und sich kreuzen.
